# EUROPEAN PATENT APPLICATION

(11) **EP 4 439 361 A1**
(43) Date of publication of application: **02.10.2024**
(21) Application number: 23770961.3
(22) Date of filing: 01.02.2023
(51) Int. Cl.: G06F 21/62, G06F 40/10

(54) **ELECTRONIC DEVICE AND OPERATING METHOD THEREFOR**

(30) Priority: 16.03.2022 KR 20220032473
(71) Applicant: Samsung Electronics Co., Ltd., Suwon-si, Gyeonggi-do 16677 (KR)
(72) Inventor: KIM, Soohyung, Suwon-si Gyeonggi-do 16677 (KR)
(74) Representative: Gulde & Partner
(86) International application number: PCT/KR2023/001474
(87) International publication number: WO 2023/177081

(57) **Abstract**

An electronic device is provided. The electronic device comprises a communication circuit and at least one processor functionally connected to the communication circuit. The at least one processor can be configured to: acquire data to be transmitted to a server; allow a fingerprint to be inserted into the data; generate a plurality of pieces of split data by dividing, into a first size, the data into which the fingerprint is inserted, wherein pieces of data of a second size overlap with each other between pieces of adjacent split data from among the plurality of pieces of split data; select one piece of split data from among the plurality of pieces of split data according to preset position-specific selection probabilities for the plurality of pieces of split data; and transmit, to the server, a report generated by obfuscating the selected one piece of split data. Other various embodiments can be provided.

## Description

### [TECHNICAL FIELD]

The disclosure relates to an electronic device and an operation method thereof. More particularly, the disclosure relates to an electronic device that collects string data in which the user's privacy is guaranteed and transmits it to a server, and an operation method thereof.

### [BACKGROUND ART]

An artificial intelligence (AI) system is a computer system that implements human-level intelligence, and is including machine learning (deep learning) and element technology using machine learning. Machine learning is an algorithm technique that it itself may classify and learn the features of input data. The element technology is a technique using a machine learning algorithm (e.g., deep learning), and is constituted of technical fields, such as linguistic understanding, visual understanding, inference/prediction, knowledge expression, and operation control.

Linguistic understanding is technology for recognizing and applying/processing a human being's language or text, and this encompasses natural language processing, machine translation, dialog system, answering inquiries, and speech recognition/synthesis. Various methods for collecting and managing various data for linguistic understanding have been proposed. For example, when the user inputs a word on a smartphone, an existing technology analyzes the input word, recommends a word the user has intended to input, or corrects a typo. To implement this technique, various string data may be collected through various methods (social networking service (SNS) server, multiple user input words, portal keywords, or the like). In this case, the collected various string data may include various string data, such as the keyword input by the user into the search engine, history information about the website visited by the user, and text messages.

The importance of security may differ depending on the type of various data collected. For example, text message data including personal information, such as the user's resident registration number and account number may require relatively high security as compared to keyword data input by the user to a search engine. Therefore, to maintain security, the user terminal may insert noise into the data collected by the user terminal to obfuscate it, and then transmit it to the server. However, as the length of the collected string data increases, the process of obfuscation and encoding by the user terminal and the process of restoration and verification by the server may be complicated.

The above information is presented as background information only to assist with an understanding of the disclosure. No determination has been made, and no assertion is made, as to whether any of the above might be applicable as prior art with regard to the disclosure.

### [DISCLOSURE]

### [Technical Problem]

Aspects of the disclosure are to address at least the above-mentioned problems and/or disadvantages and to provide at least the advantages described below. Accordingly, an aspect of the disclosure is to provide an electronic device capable of securing statistical data for character string data while meeting a similar level of differential privacy to that of the prior art even when relatively long character string data is collected, and a method for operating the same.

Another aspect of the disclosure is to provide a server capable of restoring and effectively verifying relatively long character string data collected from an electronic device and a method for operating the same.

Additional aspects will be set forth in part in the description which follows and, in part, will be apparent from the description, or may be learned by practice of the presented embodiments.

### [Technical Solution]

In accordance with an aspect of the disclosure, an electronic device is provided. The electronic device includes a communication circuit and at least one processor functionally connected with the communication circuit. The at least one processor may be configured to obtain data to be transmitted to a server, insert a fingerprint to the data, segment the fingerprint-inserted data into a first size to generate a plurality of segmented data, so that data in a second size is duplicated between adjacent segmented data among the plurality of segmented data, select one segmented data from among the plurality of segmented data according to a preset per-position selection probability for the plurality of segmented data, and transmit a report generated by obfuscating the selected one segmented data to the server.

In accordance with another aspect of the disclosure, a server is provided. The server includes a communication circuit and at least one processor functionally connected with the communication circuit. The at least one processor may be configured to receive a plurality of segmented data to which an obfuscation algorithm is applied, from an electronic device through the communication circuit, select segmented data with a frequency exceeding a predetermined value, the frequency estimated for each of the segmented data, restore candidate data by concatenating the selected segmented data based on duplicate data between the selected segmented data, and obtain the restored candidate data as final data based on a data portion and a fingerprint portion included in the restored candidate data.

In accordance with another aspect of the disclosure, a method for operating an electronic device is provided. The method includes obtaining data to be transmitted to a server, inserting a fingerprint to the data, segmenting the fingerprint-inserted data into a first size to generate a plurality of segmented data, so that data in a second size is duplicated between adjacent segmented data among the plurality of segmented data, selecting one segmented data from among the plurality of segmented data according to a preset per-position selection probability for the plurality of segmented data, and transmitting a report generated by obfuscating the selected one segmented data to the server.

In accordance with another aspect of the disclosure, a method for operating a server is provided. The method includes receiving a plurality of segmented data to which an obfuscation algorithm is applied, from an electronic device, selecting segmented data with a frequency exceeding a predetermined value, the frequency estimated for each of the segmented data, restoring candidate data by concatenating the selected segmented data based on duplicate data between the selected segmented data, and obtaining the restored candidate data as final data based on a data portion and a fingerprint portion included in the restored candidate data.

### [Advantageous Effects]

According to various embodiments of the disclosure, an electronic device and operation method thereof may secure statistical data for character string data while meeting a similar level of differential privacy to that of the prior art even when relatively long character string data is collected.

According to various embodiments of the disclosure, a server and an operation method thereof may restore and effectively verify relatively long string data collected from an electronic device.

Other aspects, advantages, and salient features of the disclosure will become apparent to those skilled in the art from the following detailed description, which, taken in conjunction with the annexed drawings, discloses various embodiments of the disclosure.

### [BRIEF DESCRIPTION OF THE DRAWINGS]

The above and other aspects, features, and advantages of certain embodiments of the disclosure will be more apparent from the following description taken in conjunction with the accompanying drawings, in which:
FIG. 1 is a view illustrating an electronic device in a network environment according to an embodiment of the disclosure;
FIG. 2 is a block diagram illustrating an electronic device according to an embodiment of the disclosure;
FIG. 3 is a block diagram illustrating a server according to an embodiment of the disclosure;
FIG. 4 is a view illustrating operations of an electronic device according to an embodiment of the disclosure;
FIG. 5 is a view illustrating operations of an electronic device according to an embodiment of the disclosure;
FIG. 6 is a view illustrating operations of a server according to an embodiment of the disclosure;
FIG. 7 is a view illustrating operations of a server according to an embodiment of the disclosure;
FIG. 8 is a view illustrating a size of a domain per position according to an embodiment of the disclosure; and
FIG. 9 is a view illustrating a local differential privacy report data reported from an electronic device to a server according to an embodiment of the disclosure.

Throughout the drawings, it should be noted that like reference numbers are used to depict the same or similar elements, features, and structures.

### [MODE FOR INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

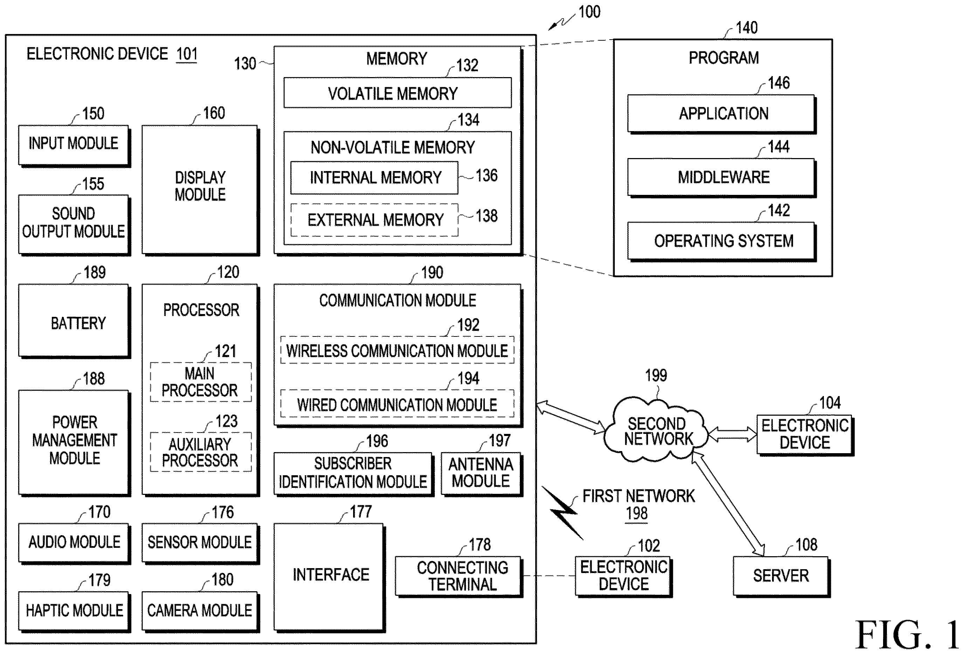

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments of the disclosure, at least one (e.g., the connecting terminal 178) of the components may be omitted from the electronic device 101, or one or more other components may be added in the electronic device 101. According to an embodiment of the disclosure, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment of the disclosure, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor configured to detect a touch, or a pressure sensor configured to measure the intensity of a force generated by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment of the disclosure, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to one embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a fifth generation (5G) network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment of the disclosure, the antenna module 197 may include one antenna including a radiator formed of a conductor or conductive pattern formed on a substrate (e.g., a printed circuit board (PCB)). According to an embodiment of the disclosure, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment of the disclosure, other parts (e.g., radio frequency integrated circuit (RFIC)) than the radiator may be further formed as part of the antenna module 197.

According to various embodiments of the disclosure, the antenna module 197 may form a mmWave antenna module. According to an embodiment of the disclosure, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment of the disclosure, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment of the disclosure, the external electronic device 104 may include an Internet-of things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment of the disclosure, a method according to various embodiments of the disclosure may be included and provided in a computer program product. The computer program products may be traded as commodities between sellers and buyers. The computer program product may be distributed in the form of a machine-readable storage medium (e.g., a compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities. Some of the plurality of entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

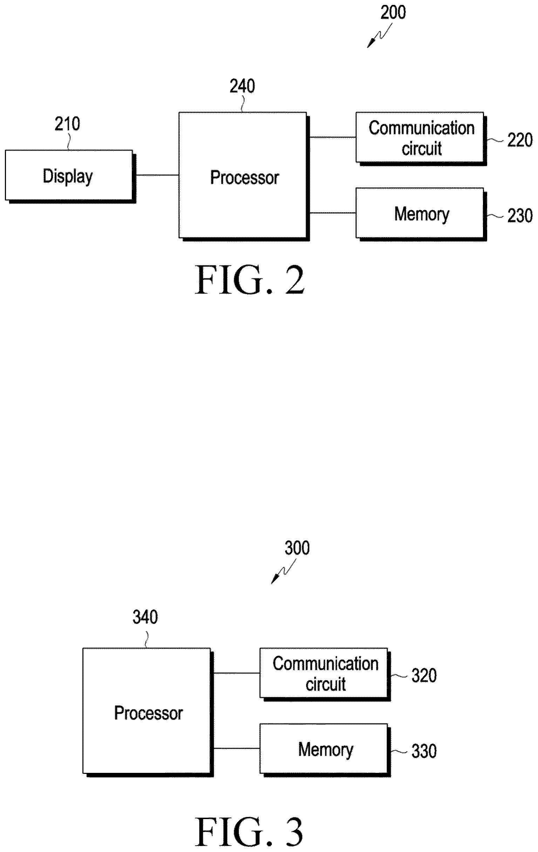

FIG. 2 is a block diagram illustrating an electronic device according to an embodiment of the disclosure.

Referring to FIG. 2, an electronic device 200 (e.g., the electronic device 101 of FIG. 1) may include a display 210, a communication circuit 220, a memory 230, and/or a processor 240.

In an embodiment of the disclosure, the display 210 may display a keyboard on the touchscreen under the control of the processor 240 and display a string input through the keyboard. In an embodiment of the disclosure, the display 210 may display the information generated by the processor 240 and the information transmitted and/or received through the communication circuit 220 under the control of the processor 240. In an embodiment of the disclosure, the display 210 may be included in the display module 160 of FIG. 1.

In an embodiment of the disclosure, the communication circuit 220 may communicate with a server (e.g., server 108 of FIG. 1) by various communication schemes. In an embodiment of the disclosure, the communication circuit 220 may transmit a report about the obfuscated string data to the server (e.g., the server 108 of FIG. 1) under the control of the processor 240. In an embodiment of the disclosure, the communication circuit 220 may be included in the communication module 190 of FIG. 1.

In an embodiment of the disclosure, the memory 230 may store the information transmitted and/or received by the communication circuit 220 and the information generated by the processor 240. According to various embodiments of the disclosure, the memory 230 may store information, commands, and/or indicators for connection with the server.

In an embodiment of the disclosure, the memory 230 may include a volatile memory or a non-volatile memory and may be implemented to be substantially the same as or similar to the memory 130 of FIG. 1.

According to an embodiment of the disclosure, the memory 230 may store an obfuscation algorithm for obfuscating the collected string data and a security parameter (privacy budget).

According to an embodiment of the disclosure, the processor 240 may be included in the processor 120 of FIG. 1. In one embodiment of the disclosure, the processor 204 may include one or more processors.

In an embodiment of the disclosure, the processor 240 may control the overall operation of the electronic device 201 and may be the same as the processor 120 of FIG. 1, or may perform at least one function or operation performed by the processor 120.

According to various embodiments of the disclosure, the processor 240 may apply artificial intelligence technology to run a software application that performs the user's desired instructions. For example, the processor 240 may perform artificial intelligence functions, such as machine learning including deep learning, speech recognition, sentence analysis, and context recognition. The processor 240 may provide a customized service to the user by learning the user's habits or patterns. The software application to which the artificial intelligence technology is applied may be, e.g., S voice or Bixby. In the disclosure, "user" may denote a human or another device (e.g., an artificial intelligent electronic device) using the electronic device.

According to various embodiments of the disclosure, the processor 240 may collect string data through the user input (e.g., a keyboard input) of the electronic device 200 and may obfuscate the collected string data using the preset obfuscation algorithm and security parameters. As the algorithm for obfuscating string data, various algorithms may be used. In the disclosure, an example of using a differential privacy algorithm is described. According to an embodiment of the disclosure, the security parameter and the obfuscation algorithm may be determined by the processor 240 and preset and stored in the memory 230 of the electronic device. According to an embodiment of the disclosure, as the security parameter decreases, the security strength may increase, and as the security parameter increases, the security strength may decrease. As the security strength increases, the protection of the user's privacy information may become stronger, but more computation and processing loads may be imposed on the server performing decoding, so that the accuracy of obtaining original data by the server may be decreased. As described above, since there is a trade-off relationship between user information protection and the accuracy of the decoded data, the processor 240 may set an appropriate security parameter for optimizing the user information protection and the accuracy of the decoded data.

According to an embodiment of the disclosure, the processor 240 may determine the security parameter according to the importance of the string data to be transmitted to the server.

According to an embodiment of the disclosure, the processor 240 may determine the security parameter according to the importance of the application that generates the string data to be transmitted to the server.

According to an embodiment of the disclosure, the processor 240 may determine a security parameter according to the user input.

According to an embodiment of the disclosure, the processor 240 may obfuscate the string data to be transmitted to the server by using the security parameter and applying an obfuscation algorithm. According to an embodiment of the disclosure, the processor 240 may obfuscate string data to generate a report and may control the communication circuit 220 to transmit the generated report to the server.

According to an embodiment of the disclosure, the processor 240 may insert a fingerprint into the collected string data and segment the fingerprint-inserted, extended string data into an n-gram domain including n-gram elements to generate a plurality of segmented data having a preset size n. According to an embodiment of the disclosure, the n-gram domain may mean a set generated according to the number of characters. For example, if a word consists of English letters (lowercase letters) containing null characters, the set of 2-gram domain may be {□□, □a,....aa,ab,ac...zz}. In other words, the set of 2-gram domain may be a set having 729 (27²) elements in total. According to an embodiment of the disclosure, the n-gram domains used in the disclosure may include some n-gram domains whose utilization is larger than or equal to a predetermined value based on previously collected data and empirical data among all the n-gram domains. According to an embodiment of the disclosure, the n-gram domain used in the disclosure may be configured to differ according to the position of each n-gram. According to an embodiment of the disclosure, an index may be assigned to each of the per-position n-gram domains. By the method, although n increases, a domain with a constant size may be maintained, so that performance deterioration of the electronic device may be minimized despite collecting relatively long string data. An index may be assigned to each of a predetermined number of elements constituting the 4-gram domain. According to an embodiment of the disclosure, the indexes may be sequentially assigned according to the order of the elements. For example, the index of "aaaa" among the elements of the 4-gram set may be set to 0, and the index of "aaab" may be set to 1.

According to an embodiment of the disclosure, information about n-gram domains used in the disclosure may be shared in advance between the electronic device and the server.

According to an embodiment of the disclosure, the processor 240 may select one of a plurality of segmented data, obfuscate the selected segment data to generate a report and send it to the server.

According to an embodiment of the disclosure, the fingerprint may be used to determine whether the original data collected by the electronic device and the data decoded by the server are the same data. According to an embodiment of the disclosure, the fingerprint may be generated by a hash function. According to an embodiment of the disclosure, the length of the fingerprint may be preset. According to an embodiment of the disclosure, the fingerprint may be a hash value obtained by applying the original data, as an input value to the hash function. As the hash values of the same data are the same, the same fingerprint may be inserted into the same data. The server may determine whether the decoded data is correct data by identifying whether the fingerprint of the decoded data is the same as the fingerprint obtained from the report.

According to an embodiment of the disclosure, the processor 240 may always transmit data of the same size to the server for efficient decoding by the server. In an embodiment of the disclosure, the length of the string data to be collected and obfuscated by the processor 240 may be preset. When the length of the collected string data is smaller than the preset size, the fingerprint may be inserted after padding the last part of the collected string data with null characters to fit the preset size. When the collected string data is larger than a preset size, the last part of the collected string data may be truncated to a preset size, and then, the fingerprint may be inserted thereto.

According to an embodiment of the disclosure, when the number of the plurality of pieces of segmented data is N, the processor 240 may sequentially insert an index into each of the plurality of pieces of segmented data. For example, the processor 130 may sequentially insert indexes 0 to N-1 to the N pieces of segmented data. According to an embodiment of the disclosure, two pieces of segmented data having successive indexes may be pieces of divided data adjacent to each other.

According to an embodiment of the disclosure, two pieces of segmented data adjacent to each other may include duplicate data having a preset size. According to an embodiment of the disclosure, the first segmented data and the last segmented data may include duplicate data larger than the preset size.

According to an embodiment of the disclosure, when the length of segmented data is n, the processor 240 may dynamically select the number of duplicate data as one of values 1 to n-1.

According to an embodiment of the disclosure, the processor 240 may select one segmented data from among the plurality of segmented data, apply an obfuscation algorithm to the selected segmented data to obfuscate it, and then generate a report on the obfuscated segmented data and transmit it to the server. According to an embodiment of the disclosure, when selecting one of the plurality of segmented data, the processor 240 may select one segmented data based on predefined per-position selection probabilities. According to an embodiment of the disclosure, the predefined per-position selection probability of each n-gram may be set based on the per-position size of the n-gram domain used in the disclosure. According to an embodiment of the disclosure, the electronic device may generate a report by applying the differentially privacy algorithm to obfuscate the selected n-gram element.

According to an embodiment of the disclosure, the report transmitted to the server may include a plurality of variables. According to an embodiment of the disclosure, the report transmitted by the electronic device to the server may include the name of the obfuscation algorithm used by the electronic device, the number of fragments per string, the length per fragment, the fragment hash size, and the string hash size. It is apparent to one of ordinary skill in the art that the number of variables constituting the report may be changed.

FIG. 3 is a block diagram illustrating a server according to an embodiment of the disclosure. According to an embodiment of the disclosure, the server 300 may be the server 108 of FIG. 1.

Referring to FIG. 3, in an embodiment of the disclosure, a server 300 may include a communication circuit 320, a memory 330, and/or a processor 340.

In an embodiment of the disclosure, the communication circuit 320 may communicate with an electronic device (e.g., the electronic device 101 of FIG. 1 or the electronic device 200 of FIG. 2) through various communication schemes. In an embodiment of the disclosure, the communication circuit 320 may receive a report of the obfuscated string data from the electronic device under the control of the processor 340.

In an embodiment of the disclosure, the memory 330 may store the information transmitted and/or received by the communication circuit 320 and the information generated by the processor 340. According to various embodiments of the disclosure, the memory 330 may store information, commands, and/or indicators for connection with the electronic device. In an embodiment of the disclosure, the memory 330 may include a volatile memory or a non-volatile memory.

According to an embodiment of the disclosure, the memory 330 may store a decoding algorithm for decoding the obfuscated data report.

In an embodiment of the disclosure, when receiving a plurality of reports on segmented data for each of a plurality of positions from a plurality of electronic devices, the processor 340 may decode the plurality of reports to obtain at least one candidate data.

In an embodiment of the disclosure, when receiving a plurality of obfuscated reports from the electronic devices, the processor 340 may sort the plurality of reports by the index based on index information included in the reports. In an embodiment of the disclosure, the processor 340 may estimate the collection frequency of string data for each position included in the report and may select strings whose estimated collection frequency is equal to or larger than a preset number of times as string data to be restored. In an embodiment of the disclosure, the processor 340 may dynamically set the frequency according to the position of each string data.

In an embodiment of the disclosure, the processor 340 may compare data included in adjacent reports among the reports sorted based on the indexes to identify whether duplicate data of a preset size is included. In an embodiment of the disclosure, the processor 340 may obtain one candidate data by concatenating reports including the same duplicated data based on a chain rule.

In an embodiment of the disclosure, the candidate data is extended data including a fingerprint and actual data, and the processor 340 may obtain the original data by using the fingerprint included in the candidate data. In an embodiment of the disclosure, the processor 340 may separate the actual data and the fingerprint from the candidate data and identify whether the hash value (i.e., fingerprint) for the separated actual data and the fingerprint separated from the candidate data are the same. In an embodiment of the disclosure, the hash function applied by the server may be the same as the hash function applied by the electronic device.

In an embodiment of the disclosure, when the hash value (i.e., fingerprint) for the separated actual data is the same as the fingerprint separated from the candidate data, the processor 340 may determine that the separated data is data received from the electronic device, and if not the same, determine that the separated data is wrong data.

According to various embodiments of the disclosure, an electronic device (e.g., the electronic device 201 of FIG. 2) may comprise a communication circuit (e.g., the communication circuit 220 of FIG. 2); and at least one processor (e.g., the processor 240 of FIG. 2) functionally connected with the communication circuit. The at least one processor may be configured to obtain data to be transmitted to a server, insert a fingerprint to the data, segment the fingerprint-inserted data into a first size to generate a plurality of segmented data, so that data in a second size is duplicated between adjacent segmented data among the plurality of segmented data, select one segmented data from among the plurality of segmented data according to a preset per-position selection probability for the plurality of segmented data, and transmit a report generated by obfuscating the selected one segmented data to the server.

According to various embodiments of the disclosure, the second size may be set to a value smaller than the first size.

According to an embodiment of the disclosure, the report may include position information about the selected one segmented data.

According to an embodiment of the disclosure, a segmented data set including a predetermined number of data among the segmented data in the first size per position as elements may be predefined. The selected one segmented data may be included in the segmented data set.

According to an embodiment of the disclosure, the per-position selection probability may be set based on a number of the elements of the segmented data set per position.

According to an embodiment of the disclosure, the processor may pad the data and inserts the fingerprint so that a size of the data is a third size when the data is smaller than the third size and truncate the data and inserts the fingerprint so that the size of the data is the third size when the data is larger than the third size.

According to various embodiments of the disclosure, a server (e.g., the server 300 of FIG. 3) may comprise a communication circuit (e.g., the communication circuit 320 of FIG. 3); and at least one processor (e.g., the processor 340 of FIG. 3) functionally connected with the communication circuit. The at least one processor may be configured to receive a plurality of segmented data to which an obfuscation algorithm is applied, from an electronic device through the communication circuit, select segmented data with a frequency exceeding a predetermined value, the frequency estimated for each of the segmented data, restore candidate data by concatenating the selected segmented data based on duplicate data between the selected segmented data, and obtain the restored candidate data as final data based on a data portion and a fingerprint portion included in the restored candidate data.

According to an embodiment of the disclosure, the report may include position information about the segmented data.

According to an embodiment of the disclosure, a segmented data set including a predetermined number of data among all combinations of per-position segmented data as elements may be predefined. The per-position segmented data included in the report may be included in the segmented data set.

According to an embodiment of the disclosure, the per-position frequency may be set based on a number of the elements of the segmented data set per position.

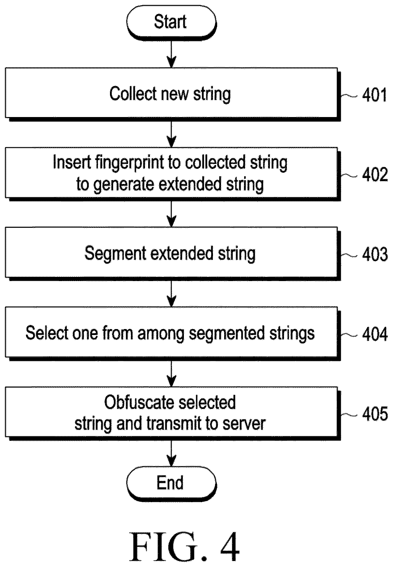

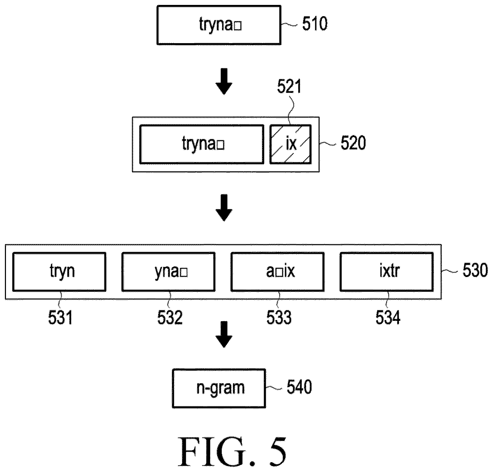

FIGS. 4 and 5 are views illustrating operations of an electronic device according to various embodiments of the disclosure. In an embodiment of the disclosure, the electronic device may be substantially the same as the electronic device 101 of FIG. 1 or the electronic device 200 of FIG. 2. In an embodiment of the disclosure, the server may be substantially the same server as the server 108 of FIG. 1 or the server 300 of FIG. 3.

In the disclosure, for convenience of description, a case of a 4-gram set alone is described, but the same technical spirit is also applicable to a 2-gram set, a 3-gram set, or any n-gram set. Further, although the word in the disclosure is limited to null characters and lowercase letters of the alphabet, other various characters including the uppercase letters of the alphabet, special symbols, or letters in other languages may also be included. Further, although the data in the disclosure is assumed to be a word, it is apparent to one of ordinary skill in the art that, without limitations thereto, the same technical spirit is also applicable to images, voices, programs, or other various data, as well as words.

FIG. 4 is a view illustrating operations of an electronic device according to an embodiment of the disclosure.

Referring to FIG. 4, in operation 401, the electronic device may collect new string data through a keyboard input. In an embodiment of the disclosure, the length of the string data to be collected and obfuscated may be preset. When the length of the collected string data is smaller than the preset size, the last part of the collected string data may be padded with null characters to fit the preset size and, when the collected string data is larger than a preset size, the last part of the collected string data may be truncated to a preset size.

For example, in a case where the collected string data is "tryna" and the length of the string data to be obfuscated by the electronic device is set to 6, as the collected string data "tryna" is five characters, the electronic device may pad the last data with the null character "□", such as "tryna□" 510 of FIG. 5.

In operation 402, the electronic device may insert a fingerprint into the string data to be obfuscated to generate an extended string including the string data and the fingerprint. According to an embodiment of the disclosure, the fingerprint may be generated by a hash function. According to an embodiment of the disclosure, the fingerprint may be a hash value obtained by applying the original data, as an input value, to the hash function. For example, when the length of the fingerprint is set to 2, the electronic device may obtain the fingerprint "ix" 521 by inputting the string "tryna□" 510 to be obfuscated into the preset hash function h. According to an embodiment of the disclosure, the electronic device may insert the obtained fingerprint "ix" 521 into "tryna□" 510 to generate the extended string "tryna□ix" 520.

In operation 403, the electronic device may segment the extended string into strings (n-gram) having a predetermined length so that a preset number of data is duplicated between adjacent segmented strings. In the last segmented string and the first segmented string, data in excess of a preset number may be duplicated.

According to an embodiment of the disclosure, when the length of segmented data is n, the number of duplicate data may dynamically be selected as one of values 1 to n-1.

FIG. 5 is a view illustrating operations of an electronic device according to an embodiment of the disclosure.

Referring to FIG. 5, the electronic device may segment the extended string "tryna□ix" 520 into 4-grams 530, i.e., into four elements "tryn" 531, "ynaD" 532, "aDix" 533, and "ixtr" 534 so that the strings adjacent to each other include two duplicate characters. In other words, segmentation may be performed so that "yn" is duplicated in "tryn" 531 and "ynaD" 532, "a□" is duplicated in "yna□" 532 and "aDix" 533, "ix" is duplicated in "aDix" 533 and "ixtr" 534, and "tr" is duplicated in the last element "ixtr" 534 and the first element "tryn" 531.

In operation 404, the electronic device may select one n-gram 540 from among the segmented n-gram elements 531 to 534. According to an embodiment of the disclosure, the electronic device may know the n-gram domain that has been previously negotiated with the server and configured to include only a part of the entire n-gram domain. According to an embodiment of the disclosure, the n-gram domain used in the disclosure may include some n-grams whose use frequency is larger than or equal to a predetermined value based on previously collected data and empirical data. According to an embodiment of the disclosure, the n-gram domain used in the disclosure may be configured to differ according to the position of each n-gram. According to an embodiment of the disclosure, an index may be assigned to each of the per-position n-gram domains.

For example, the electronic device may configure a 4-gram domain only constituted of a predetermined number of elements, except for the elements which are used at the smallest frequency, such as "xyxy" and "zzzz" among the elements {aaaa, aaab, aaac, ..., zzzy, zzzz} of all possible 4-gram sets. By the method, although n increases, a domain with a constant size may be maintained, so that performance deterioration of the electronic device may be minimized despite collecting relatively long string data. An index may be assigned to each of a predetermined number of elements constituting the 4-gram domain. According to an embodiment of the disclosure, the indexes may be sequentially assigned according to the order of the elements. For example, the index of "aaaa" among the elements of the 4-gram set may be set to 0, and the index of "aaab" may be set to 1.

According to an embodiment of the disclosure, the electronic device may select one n-gram element 540 among the segmented n-gram elements 531 to 534 based on the per-position selection probability of each n-gram previously defined. According to an embodiment of the disclosure, the predefined per-position selection probability of each n-gram may be set based on the per-position size of the n-gram domain used in the disclosure. For example, the selection probabilities of the segmented n-gram elements "tryn" 531, "ynaD" 532, "aDix" 533, and "ixtr" 534 may be set to 30%, 25%, 30%, and 15%, respectively.

In operation 405, the electronic device may obfuscate the selected n-gram element 540 to generate a report, and then transmit the report to the server. According to an embodiment of the disclosure, the electronic device may generate a report by applying the differentially privacy algorithm to obfuscate the selected n-gram element. For example, when "ynaD" 532 in the second position is selected, according to the predefined per-position selection probabilities, from the set of 4-gram elements, the electronic device may generate a report constituted of two variables by applying the differential privacy algorithm to "ynaD" 532. For example, when the function applied to the differential privacy algorithm used by the electronic device is f(x), the electronic device may generate (f(ynaD), 2) as a report. Here, f(ynaD) may denote the value obtained by applying the differential privacy algorithm to "ynaD," and 2 may denote the position information about "yna□" indicating that the selected element is the second element in the total 4-gram. In this case, it is apparent to one of ordinary skill in the art that the number of variables constituting the report may be changed.

According to an embodiment of the disclosure, the report transmitted by the electronic device to the server may include the name of the obfuscation algorithm used by the electronic device, the number of fragments per string, the length per fragment, the fragment hash size, and the string hash size.

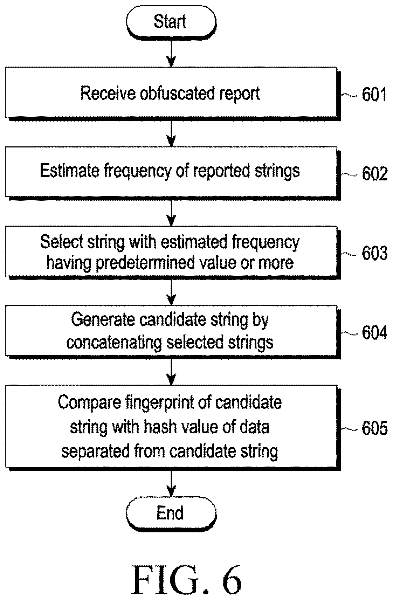

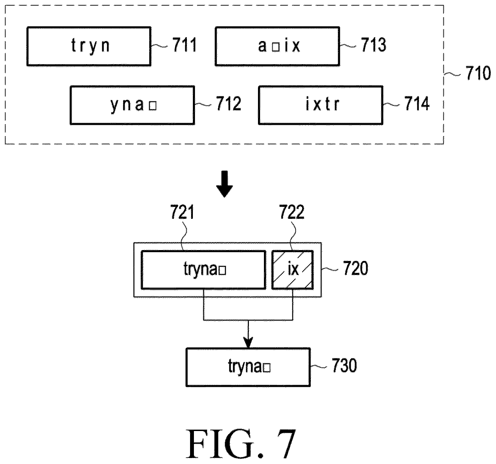

FIGS. 6 and 7 are views illustrating operations of a server according to various embodiments of the disclosure. In an embodiment of the disclosure, the server may be substantially the same server as the server 108 of FIG. 1 or the server 300 of FIG. 3. In an embodiment of the disclosure, the electronic device may be substantially the same as the electronic device 101 of FIG. 1 or the electronic device 200 of FIG. 2.

In the disclosure, for convenience of description, a case of a 4-gram set alone is described, but the same technical spirit is also applicable to a 2-gram set, a 3-gram set, or any n-gram set. Further, although the word in the disclosure is limited to null characters and lowercase letters of the alphabet, other various characters including the uppercase letters of the alphabet, special symbols, or letters in other languages may also be included. Further, although the data in the disclosure is assumed to be a word, it is apparent to one of ordinary skill in the art that, without limitations thereto, the same technical spirit is also applicable to images, voices, programs, or other various data, as well as words.

FIG. 6 is a view illustrating operations of a server according to an embodiment of the disclosure.

Referring to FIG. 6, in operation 601, the server may receive obfuscated reports from the electronic device. According to an embodiment of the disclosure, the server may collect per-position n-gram reports from the electronic device. For example, when the function applied to the differential privacy algorithm used by the server is g(x), the server may obtain the result of applying g(x) to each n-gram string included in the collected report. g(x) may be a function that performs an inverse transformation of the function f(x) applied in the electronic device.

In operation 602, the server may estimate the per-position collection frequency of the strings corresponding to the g(x) function value. An index may be assigned to each of the per-position n-gram domains corresponding to the g(x) function value, and a plurality of reports may be collected per index.

In operation 603, the server may select strings with a preset collection frequency being a preset number or more, as strings to be restored.

FIG. 7 is a view illustrating operations of a server according to an embodiment of the disclosure.

Referring to FIG. 7, when the preset collection frequency is 20000, the server may select "tryn" 711, "ynaD" 712, "aDix" 713, and "ixtr" 714, as per-position strings 710 with a collection frequency being the preset value 20000.

In operation 604, the server may generate an extended candidate string by concatenating the selected strings 711 to 714 based on a chain rule.

Referring to FIG. 5, since "yn" is duplicated in "tryn" 711 and "ynaD" 712, "aD" is duplicated in "ynaD" 712 and "aDix" 713, "ix" is duplicated in "aDix" 713 and "ixtr" 714, and "tr" is duplicated in "ixtr" 714 and "tryn" 711, the extended candidate string "trynaDix" 720 may be obtained by arranging and concatenating the strings 711 to 714 so that the duplicate characteristics overlap.

In operation 605, the server may separate the candidate string 720 into actual data 721 and the fingerprint 722 and apply the separated data 721 to a hash function to obtain a hash value (fingerprint) 730. According to an embodiment of the disclosure, the server may compare the hash value obtained from the separated data 721 with the fingerprint 722 separated from the candidate string 720 to determine whether these two values are the same. In an embodiment of the disclosure, the hash function applied by the server may be the same as the hash function applied by the electronic device.

In an embodiment of the disclosure, when the hash value (fingerprint) for the separated data is the same as the separated fingerprint, the server may determine that the separated data is data received from the electronic device, and if not the same, determine that the separated data is wrong data.

Referring to FIG. 5, the server may obtain a hash value by applying "trynaD" 721 to the hash function. In an embodiment of the disclosure, when the hash value of "trynaD" 721 is the same as the fingerprint 722 as ix, the server may determine that the word transmitted by the electronic device is "trynaD".

According to an embodiment of the disclosure, a word smaller than a preset size (e.g., 6 characters) is restored as input by the user, but a word larger than the preset size (e.g., 6 characters) may not be restored as input by the user. According to an embodiment of the disclosure, the server may analyze the restored word to estimate the original word. For example, the server may build a learning model related to word completion by inputting various data related to automatic word completion or data related to grammar information, as learning data, to the artificial intelligence model. When the learning model related to word completion is built, the server may estimate the original word by inputting the decoded word to the artificial intelligence model as input data.

FIG. 7 is a view illustrating a size of a domain per position according to an embodiment of the disclosure. In connection with FIG. 7, for convenience of description, a case of a 4-gram set alone is described, but the same technical spirit is also applicable to a 2-gram domain, a 3-gram domain, or any n-gram domain. Further, although the word in the disclosure is limited to null characters and lowercase letters of the alphabet, other various characters including the uppercase letters of the alphabet, special symbols, or letters in other languages may also be included. Further, although the data in the disclosure is assumed to be a word, it is apparent to one of ordinary skill in the art that, without limitations thereto, the same technical spirit is also applicable to images, voices, programs, or other various data, as well as words.

Referring to FIG. 7, according to an embodiment of the disclosure, the string obfuscation method may utilize a different domain size for each position (e.g., 1 to 15). For example, the size of domain of position 1 is 40000, which is larger than the size of domain of position 15 which is 10000, indicating that the domain of position 1 is configured as a relatively dense domain as compared to the domain of position 15. According to an embodiment of the disclosure, it is possible to utilize the optimized domain by only using top k 4-gram domains, which are frequently used, and removing 4-gram domains which are relatively less frequently used, instead of using all the 4-gram domains. According to an embodiment of the disclosure, the size of the 4-gram domain is negotiated with the server in advance, and may be set based on previously collected data and empirical data.

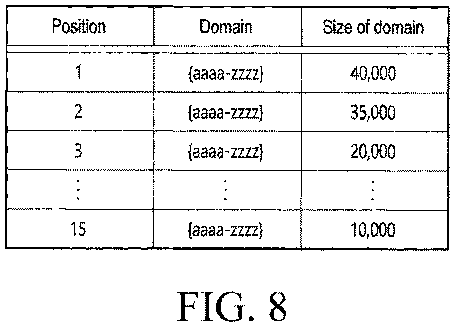

FIG. 8 is a view illustrating a size of a domain per position according to an embodiment of the disclosure.

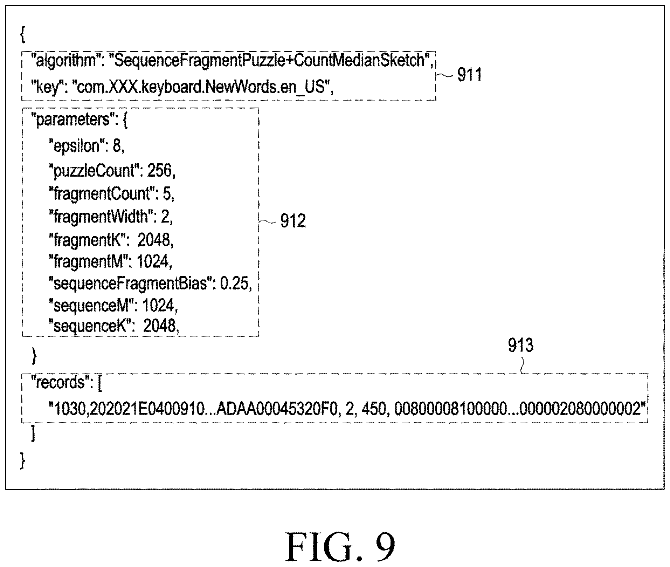

FIG. 9 illustrates local differential privacy report data reported from an electronic device to a server according to an embodiment of the disclosure.

The electronic device, which transmits user data to the server using the local differential privacy algorithm, may periodically generate a report for the user data transmitted to the server and transmit it to the server. The user of the electronic device may identify the report transmitted to the server through the electronic device.

Referring to FIGS. 8 and 9, the report transmitted to the server may include a first portion 911 indicating the type of algorithm used for obfuscation and the type of data to be collected, a second portion 912 including parameters indicating algorithm-related set values, and a third portion 913 including the data to which the obfuscation algorithm is applied and transmitted to the server.

"SequenceFragmentPuzzle" of the algorithm information included in the first portion 911 may indicate an algorithm that segments the string (sequence) into fragments, and "CountMedianSketch" may indicate a sub algorithm that applies the local differential privacy algorithm to the strings segmented as fragments and counts the frequency. Therefore, it is possible to know the method for segmenting the string into fragments based on the information included in the first portion 911 and the method for applying the local differential privacy algorithm to each fragment.

The key information "com.apple,keyboard,NewWords.en US" of the first portion 911 may indicate that new words in English have been collected from the keyboard app.

Among the parameters of the second portion 912, "epsilon" is a value indicating a protection level, and the smaller value may indicate a higher protection level. "puzzleCount" may indicate the length of the data, "fragmentCount" may indicate the number of fragments per string, "fragmentWidth" may indicate the length per fragment, "fragmentK" and "sequenceK" may indicate the type of the hash function, "fragmentM" may indicate the hash size of segmented data and be a value related to the domain size of segmented data, and "sequenceM" may indicate the hash size of string data and may be a value related to the domain size of string data.

For example, when it is assumed that the reported string is "California," it may be segmented into five segmented data, such as Ca/li/fo/rn/ia based on fragmentCount=5 and fragmentWidth=2. Therefore, it may be seen that FIG. 9 is a case where segmented data does not partially overlap.

Referring to FIG. 9, since fragmentM and sequenceM have the same value as 1024, it may be seen that a different n-gram domain configuration is not used for each position.

The third portion 913 may include the segmented data to which the obfuscation algorithm is applied and which is transmitted to the server and position information about the segmented data. Therefore, it is possible to indirectly identify whether the same proportion of segmented data per position has been transmitted by collecting the position information about massive data.

According to various embodiments of the disclosure, a method for operating an electronic device (e.g., the electronic device 201 of FIG. 2) may comprise obtaining data to be transmitted to a server, inserting a fingerprint to the data, segmenting the fingerprint-inserted data into a first size to generate a plurality of segmented data, so that data in a second size is duplicated between adjacent segmented data among the plurality of segmented data, selecting one segmented data from among the plurality of segmented data according to a preset per-position selection probability for the plurality of segmented data, and transmitting a report generated by obfuscating the selected one segmented data to the server.

According to various embodiments of the disclosure, the second size may be set to a value smaller than the first size.

According to an embodiment of the disclosure, the report may include position information about the selected one segmented data.

According to an embodiment of the disclosure, a segmented data set including a predetermined number of data among the segmented data in the first size per position as elements may be predefined. The selected one segmented data may be included in the segmented data set.

According to an embodiment of the disclosure, the per-position selection probability may be set based on a number of the elements of the segmented data set per position.

According to an embodiment of the disclosure, inserting the fingerprint may pad the data and inserts the fingerprint so that a size of the data is a third size when the data is smaller than the third size and truncate the data and inserts the fingerprint so that the size of the data is the third size when the data is larger than the third size.

According to various embodiments of the disclosure, a method for operating a server (e.g., the server 300 of FIG. 3) may comprise receiving a plurality of segmented data to which an obfuscation algorithm is applied, from an electronic device, selecting segmented data with a frequency exceeding a predetermined value, the frequency estimated for each of the segmented data, restoring candidate data by concatenating the selected segmented data based on duplicate data between the selected segmented data, and obtaining the restored candidate data as final data based on a data portion and a fingerprint portion included in the restored candidate data.

According to an embodiment of the disclosure, the report may include position information about the segmented data.

According to an embodiment of the disclosure, a segmented data set including a predetermined number of data among all combinations of per-position segmented data as elements may be predefined. The per-position segmented data included in the report may be included in the segmented data set.

According to an embodiment of the disclosure, the per-position frequency may be set based on a number of the elements of the segmented data set per position.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
a communication circuit; and
at least one processor functionally connected with the communication circuit,
wherein the at least one processor is configured to:
obtain data to be transmitted to a server,
insert a fingerprint to the data,
segment the fingerprint-inserted data into a first size to generate a plurality of segmented data, so that data in a second size is duplicated between adjacent segmented data among the plurality of segmented data,
select one segmented data from among the plurality of segmented data based on a preset per-position selection probability for the plurality of segmented data, and
transmit a report generated by obfuscating the selected one segmented data to the server.

2. The electronic device of claim 1, wherein the second size is set to a value smaller than the first size.

3. The electronic device of claim 1, wherein the report includes position information about the selected one segmented data.

4. The electronic device of claim 1,
wherein a segmented data set including a predetermined number of data among all combinations of per-position segmented data in the first size as elements is predefined, and
wherein the selected one segmented data is included in the segmented data set,
wherein the per-position selection probability is set based on a number of the elements of the segmented data set per position.

5. The electronic device of claim 1, wherein the processor:
pads the data and inserts the fingerprint so that a size of the data is a third size when the data is smaller than the third size; and
truncates the data and inserts the fingerprint so that the size of the data is the third size when the data is larger than the third size.

6. A server comprising:
a communication circuit; and
at least one processor functionally connected with the communication circuit,
wherein the at least one processor is configured to:
receive a plurality of segmented data to which an obfuscation algorithm is applied and a report for the plurality of segmented data, from an electronic device through the communication circuit,
select segmented data with a frequency exceeding a predetermined value, the frequency estimated for each of the segmented data,
restore candidate data by concatenating the selected segmented data based on duplicate data between the selected segmented data, and
obtain the restored candidate data as final data based on a data portion and a fingerprint portion included in the restored candidate data.

7. The server of claim 6, wherein the report includes position information about the segmented data.

8. The server of claim 6,
wherein a segmented data set including a predetermined number of data among all combinations of per-position segmented data as elements is predefined, and
wherein the per-position segmented data included in the report is included in the segmented data set,
wherein the frequency of the per-position segmented data is set based on a number of the elements of the per-position segmented data.

9. A method for operating an electronic device, the method comprising:
obtaining data to be transmitted to a server;
inserting a fingerprint to the data;
segmenting the fingerprint-inserted data into a first size to generate a plurality of segmented data, so that data in a second size is duplicated between adjacent segmented data among the plurality of segmented data;
selecting one segmented data from among the plurality of segmented data based on a preset per-position selection probability for the plurality of segmented data; and
transmitting a report generated by obfuscating the selected one segmented data to the server.

10. The method of claim 11, wherein the second size is set to a value smaller than the first size,
wherein the report includes position information about the selected one segmented data.

11. The method of claim 9,
wherein a segmented data set including a predetermined number of data among all combinations of per-position segmented data in the first size as elements is predefined, and
wherein the selected one segmented data is included in the segmented data set.
wherein the per-position selection probability is set based on a number of the elements of the segmented data set per position.

12. The method of claim 9, wherein inserting the fingerprint includes:
padding the data and inserting the fingerprint so that a size of the data is a third size when the data is smaller than the third size; and
truncating the data and inserting the fingerprint so that the size of the data is the third size when the data is larger than the third size.

13. A method for operating a server, the method comprising:
receiving a plurality of segmented data to which an obfuscation algorithm is applied and a report for the plurality of segmented data, from an electronic device;
selecting segmented data with a frequency exceeding a predetermined value, the frequency estimated for each of the segmented data;
restoring candidate data by concatenating the selected segmented data based on duplicate data between the selected segmented data; and
obtaining the restored candidate data as final data based on a data portion and a fingerprint portion included in the restored candidate data.

14. The method of claim 13, wherein the report includes position information about the segmented data.

15. The method of claim 13,
wherein a segmented data set including a predetermined number of data among all combinations of per-position segmented data as elements is predefined, and
wherein the per-position segmented data included in the report is included in the segmented data set,
wherein the frequency of the per-position segmented data is set based on a number of the elements of the per-position segmented data,
wherein two pieces of segmented data adjacent to each other include duplicate data having a preset size, and
wherein a first segmented data and a last segmented data include duplicate data larger than the preset size.
